# FASCICULE DE BREVET EUROPEEN

(11) **EP 2 876 008 B1**
(45) Date de publication et mention de la délivrance du brevet: **02.01.2019**
(21) Numéro de dépôt: 14193522.1
(22) Date de dépôt: 17.11.2014
(51) Int. Cl.: B60T 8/17, F16D 65/18, B60T 8/32, B60T 13/74, B60T 17/22

(54) **Actionneur électromécanique pour frein de véhicule et système de freinage comportant un tel actionneur**
Elektromechanisches Stellglied für Fahrzeugbremse und Bremssystem, das ein solches Stellglied umfasst.
Electromechanical actuator for vehicle brake and braking system comprising such an actuator

(30) Priorité: 20.11.2013 FR 1361383
(43) Date de publication de la demande: 27.05.2015
(73) Titulaire: Safran Landing Systems, 78140 Vélizy-Villacoublay (FR)
(72) Inventeur: Selles, Franck, 77170 Brie-Comte-Robert (FR); Evenor, Eric, 78140 Velizy-Villacoublay (FR); Richard, Nathanaël, 78140 Velizy-Villacoublay (FR)
(74) Mandataire: Parzy, Benjamin Alain

(56) Documents cités:
- EP-A1- 1 653 111
- EP-A1- 1 679 453
- WO-A1-01/20188
- WO-A2-2005/001303
- DE-A1-102004 062 810
- DE-A1-102010 040 426
- FR-A1- 2 875 876
- FR-A1- 2 885 660
- FR-A1- 2 903 162
- FR-A1- 2 989 657
- GB-A- 2 312 717

## Description

L'invention concerne un actionneur électromécanique pour frein de véhicule et un système de freinage comportant un tel actionneur.

Des actionneurs du mémé type sont déjà connus par les documents DE 10 2010 040 426 A1, ou FR 2 885 660 A1 ou FR 2 989 657 A1.

### ARRIERE PLAN DE L'INVENTION

Un actionneur électromécanique d'un frein d'une roue d'aéronef comporte classiquement un poussoir muni d'un patin et un moteur électrique adapté à déplacer le poussoir en regard d'organes de friction du frein (une pile de disques de carbone par exemple), de manière à exercer sur la roue un couple de freinage tendant à ralentir l'aéronef.

De tels actionneurs sont alimentés électriquement et commandés par des moyens de commande externes qui reçoivent une consigne de freinage et déterminent un effort de freinage à appliquer sur les organes de frictions.

Il est fondamental pour la sécurité de l'aéronef de s'assurer, d'une part, qu'un effort de freinage commandé est bien appliqué, et d'autre part, qu'un effort de freinage n'est pas appliqué de manière intempestive.

La consigne de freinage, l'alimentation électrique et la commande des moteurs sont bien sûr surveillées, mais il est aussi nécessaire de s'assurer que le comportement réel de l'actionneur correspond bien au comportement attendu.

Pour surveiller le comportement réel de l'actionneur, on peut mettre en oeuvre une première méthode consistant à détecter l'application d'un effort de freinage par surveillance des variations du courant électrique consommé par le moteur de l'actionneur. Cette première méthode présente un risque important de détection intempestive d'effort de freinage. On peut aussi mettre en oeuvre une seconde méthode consistant à intégrer un capteur d'effort directement dans l'actionneur. Cette seconde méthode présente un certain nombre d'inconvénients : coûts, sensibilité à l'environnement, etc.

### OBJET DE L'INVENTION

L'invention a pour objet un actionneur électromécanique muni de moyens pour détecter si un effort de freinage est réellement appliqué ou non et ne présentant pas les inconvénients précités, ainsi qu'un système de freinage comportant un tel actionneur.

### RESUME DE L'INVENTION

En vue de la réalisation de ce but, on propose un actionneur électromécanique selon la revendication 1.

Ainsi, en détectant le déplacement axial de l'écrou, on détecte si un effort de freinage est effectivement appliqué par l'actionneur électromécanique. Il existe des moyens de détection d'un déplacement axial simples et très fiables, ce qui permet, d'une part, de réaliser la détection de l'effort de freinage en utilisant une solution peu onéreuse, et d'autre part, de réduire grandement le risque de détection intempestive.

On propose de plus un système de freinage d'un véhicule comprenant au moins une roue équipée d'un frein muni d'un actionneur électromécanique tel que décrit plus tôt. Le système de freinage comporte des moyens de contrôle connectés à l'actionneur et des moyens de mesure électrique connectés au contacteur et adaptés à détecter si un effort de freinage est effectivement appliqué par l'actionneur.

### BREVE DESCRIPTION DES DESSINS

L'invention sera mieux comprise à la lumière de la description qui suit en référence aux figures des dessins annexés parmi lesquelles :
- la figure 1 est une vue schématique en coupe d'un actionneur électromécanique de l'invention ;
- la figure 2 est une vue de détail de l'actionneur de la figure 1 au niveau des moyens de détection, l'écrou de l'actionneur étant dans une position de repos ;
- la figure 3 est une vue de détail de l'actionneur de la figure 1, l'écrou étant dans une position active ;
- la figure 4 est une vue en coupe selon la ligne A-A de la figure 1 illustrant six contacteurs de l'actionneur de l'invention positionnés à la périphérie d'une plaque d'appui de l'actionneur ;
- les figures 5a et 5b sont des schémas électriques d'un premier et d'un deuxième circuits de mesure dans lesquels sont connectés les contacteurs de l'actionneur de l'invention, dans un mode de fonctionnement nominal, alors qu'un effort de freinage est appliqué ;
- les figures 5c et 5d sont des figures analogues aux figures 5a et 5b illustrant le premier et le deuxième circuits de mesure dans un mode de fonctionnement nominal, alors qu'aucun effort de freinage n'est appliqué ;
- les figures 6a et 6b représentent le premier et le deuxième circuits de mesure, dans un cas de panne de ressorts de maintien de deux contacteurs du deuxième circuit de mesure, alors qu'aucun effort de freinage n'est appliqué ;
- les figures 6c et 6d sont des figures analogues aux figures 6a et 6b illustrant le premier et le deuxième circuits de mesure dans un cas de circuit ouvert se produisant sur le premier circuit de mesure, alors qu'aucun effort de freinage n'est appliqué.

### DESCRIPTION DETAILLEE DE L'INVENTION

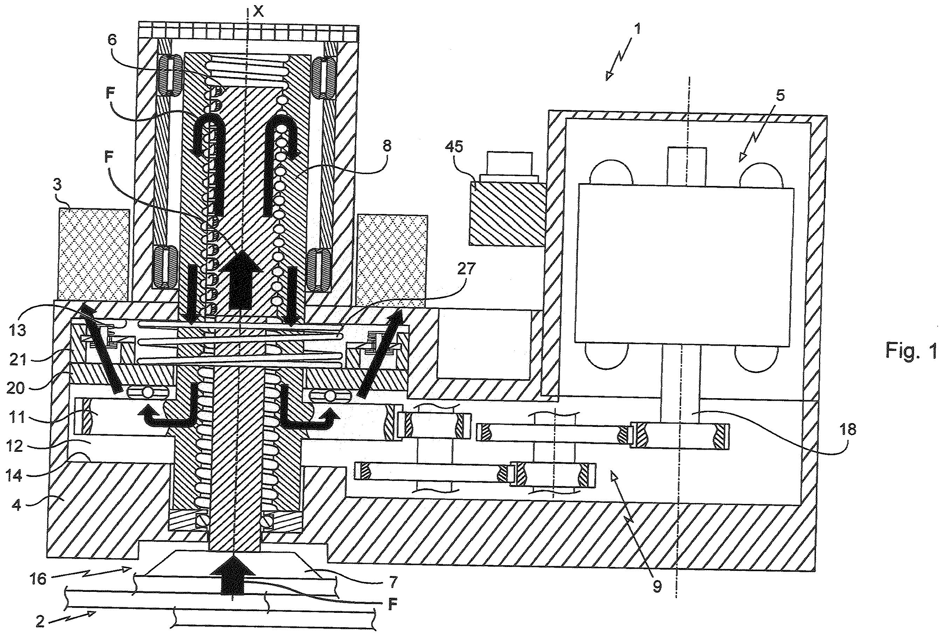

En référence à la figure 1, un actionneur électromécanique 1 de l'invention est ici destiné à appliquer sélectivement un effort de freinage sur des organes de friction d'un frein d'une roue d'aéronef, ici une pile de disques de carbone 2. Cet actionneur 1 est monté sur un porte-actionneurs 3 du frein et est fixé au porte-actionneurs 3 grâce à des moyens de fixation non représentés sur la figure 1.

L'actionneur électromécanique 1 de l'invention comporte un corps 4 dans lequel sont agencés un moteur électrique 5 et un poussoir 6 muni d'un patin 7. Le poussoir. 6 est fileté et coopère par l'intermédiaire d'une liaison hélicoïdale avec un écrou 8 entraîné en rotation par le moteur électrique 5 via un dispositif de réduction 9 et une roue dentée 11 rigidement solidaire de l'écrou 8. La roue dentée 11 s'étend dans une cavité 12 du corps 4 de l'actionneur 1 entre une première surface interne 13 du corps 4 parallèle à la roue dentée 11 et une deuxième surface interne 14 elle aussi parallèle à la roue dentée 11 et dans laquelle est formée une ouverture 16 débouchant en regard de la pile de disques 2.

Une rotation d'un arbre 18 du moteur électrique 5 provoque ainsi un coulissement du poussoir 6 dans la cavité 12 à l'intérieur du corps 4 de l'actionneur 1 selon un axe de coulissement X, le poussoir 6 saillant du corps 4 de l'actionneur 1 au travers de l'ouverture 16 pour appliquer l'effort de freinage sur la pile de disques 2. Un dispositif d'anti-rotation, non visible sur la figure 1, empêche toute rotation du poussoir 6 autour de l'axe de coulissement X. Tout ceci est bien connu et n'est rappelé que pour donner le contexte de l'invention.

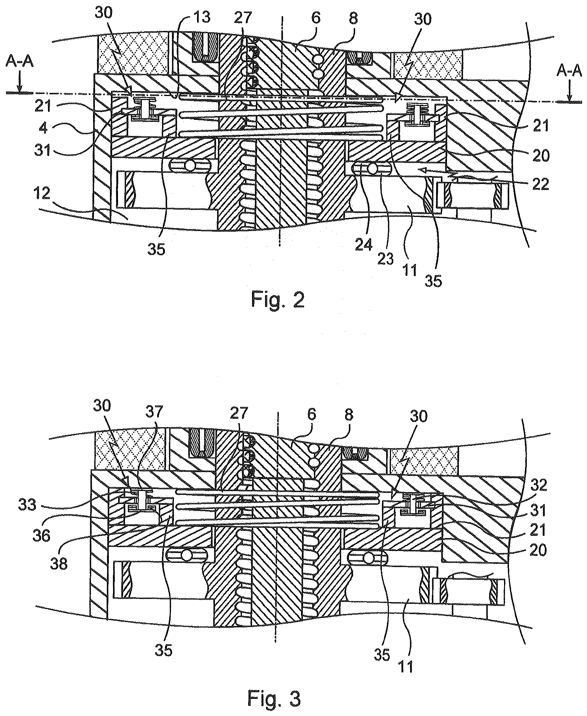

L'écrou 8 est ici monté mobile axialement dans le corps 4 de l'actionneur 1 entre une position de repos, visible sur la figure 2, et une position active, visible sur la figure 3, dans laquelle la roue dentée 11 est rapprochée de la première surface interne 13 du corps 4.

La position de repos correspond à une situation dans laquelle aucun effort de freinage n'est appliqué. La position active, quant à elle, correspond à une situation dans laquelle un effort de freinage est appliqué.

L'écrou 8 est donc déplacé axialement lorsqu'un effort de freinage est appliqué. Ce déplacement axial résulte d'un effort de réaction généré par la pile de disques 2 lors d'un freinage, qui tend à s'opposer à l'effort de freinage. Cet effort de réaction est appliqué par la pile de disques 2 sur le patin 7 du poussoir 6 de l'actionneur 1, puis est transmis successivement au poussoir 6 lui-même, à l'écrou 8, à la roue dentée 11, au corps 4 de l'actionneur 1 et au porte-actionneur 3, selon un chemin d'effort représenté par des flèches épaisses F sur la figure 1. Cet effort de réaction tend à déplacer axialement l'écrou 8 et la roue dentée 11, et à rapprocher la roue dentée 8 de la première surface interne 13 du corps 4.

La cavité 12 du corps 4 de l'actionneur 1 comporte de plus une plaque d'appui 20 de forme générale annulaire située entre la roue dentée 11 et la première surface interne 13 du corps 4.

La plaque d'appui 20 s'étend autour de l'écrou 8 et est montée solidaire axialement de l'écrou 8 tout en étant libre en rotation vis-à-vis de l'écrou. La plaque d'appui 20 vient en appui par l'intermédiaire d'une butée à billes 22 contre la roue dentée 11. Cette butée à billes 22 comprend une bague tournante 23 solidaire de la roue dentée 11 et une bague fixe 24 fixée à la plaque d'appui 20.

Le déplacement axial de l'écrou 8 et de la roue dentée 11 génère un déplacement axial identique de la plaque d'appui 20, alors que la rotation de l'écrou 8 et de la roue dentée 11 est absorbée par les billes de la butée à bille 22 via la bague tournante 23 et n'est pas transmise à la plaque d'appui 20. L'effort de réaction est quant à lui transmis depuis l'écrou 8 et la roue dentée 11 vers des moyens de butée 21 agencés à la périphérie de la plaque d'appui 20 via la bague tournante 23, les billes et la bague fixe 24 de la butée à billes 22.

Lorsque l'écrou 8 est dans la position active et subit le déplacement axial, les moyens de butée 21 viennent buter contre la première surface interne 13 du corps 4, reprennent intégralement l'effort de réaction et le transmettent au corps 4 de l'actionneur 1.

L'actionneur 1 comporte de plus des moyens élastiques tendant à éloigner la plaque d'appui 20 de la première surface interne 13 du corps 4 et donc à repousser l'écrou 8 vers la position de repos. Ces moyens élastiques permettent notamment d'assurer que l'écrou 8 retrouve sa position de repos lorsque l'application de l'effort de freinage est achevée.

Ces moyens élastiques s'étendent entre le corps 4 de l'actionneur 1 et la plaque d'appui 20, et comportent ici un ressort de compression 27 ayant deux extrémités dont l'une est fixée à la plaque d'appui 20 et l'autre à la première surface interne 13 du corps 4 de l'actionneur 1. Le ressort 27 est ici taré pour exercer un effort de tarage prédéterminé sur la plaque d'appui 20 tendant à éloigner celle-ci de la première surface interne 13. Ainsi, lorsqu'un effort de freinage est appliqué, c'est le ressort de compression 27 qui reprend tout d'abord l'effort de réaction transmis par la plaque d'appui 20, jusqu'à ce que cet effort de réaction devienne supérieur à l'effort de tarage prédéterminé. Lorsque l'effort de réaction est supérieur à l'effort de tarage prédéterminé, l'écrou 8 vient en position active et les moyens de butée 21 viennent buter contre la première surface interne 13.

On comprend donc qu'il est possible de détecter qu'un effort de freinage est appliqué en détectant le déplacement axial de l'écrou 8 vers sa position active, résultant de l'application de l'effort de freinage, et donc un déplacement axial de la plaque d'appui 20.

On comprend aussi qu'en détectant le déplacement axial de la plaque d'appui 20 et en utilisant un ressort de compression agencé comme celui décrit plus tôt, il est possible de déterminer un effort de freinage minimum en dessous duquel aucun effort de freinage ne sera détecté. Cet effort de freinage minimum à détecter est égal à l'effort de tarage prédéterminé du ressort de compression 27.

Pour détecter le déplacement axial de la plaque d'appui 20, on munit la plaque d'appui 20 d'au moins un contacteur 30, en l'occurrence ici de six contacteurs 30.

Chaque contacteur 30 comporte une carte électrique 31 située entre la plaque d'appui 20 et la première surface interne 13, un élément de détection 32 et un ressort de maintien 33.

La carte électrique 31 est fixée aux moyens de butée mécanique 21 et à un élément de support 35 lui-même monté sur la plaque d'appui 20. L'élément de détection 32 comporte un corps traversant la carte électrique ainsi qu'une première extrémité plane 36 et une deuxième extrémité plane 37 situées de part et d'autre de la carte électrique 31. La première extrémité plane 36 comporte des contacts 38 disposés pour fermer un circuit de la carte électrique 31 lorsque l'élément de détection 32 est dans une position de repos correspondant à une situation dans laquelle les moyens de butée 21 ne sont pas en contact avec la première surface interne 13. La position de repos de l'élément de détection 32 correspond donc à la position de repos de l'écrou 8.

Lorsque l'écrou 8 vient en position active, la deuxième extrémité plane 37 de l'élément de détection 32 vient en contact avec la première surface interne 13 du corps 4 de l'actionneur 1 ce qui a pour effet d'éloigner la première extrémité plane 36 de la carte électrique 31 et d'ouvrir le circuit de la carte électrique 31.

Le contacteur 30 joue donc ici le rôle d'un interrupteur ouvert lorsqu'un effort de freinage est appliqué et fermé lorsqu'aucun effort de freinage n'est appliqué.

Le ressort de maintien 33 est disposé entre la carte électrique 31 et la deuxième extrémité plane 37, et exerce un effort de compression qui tend à repousser la deuxième extrémité plane 37 de la carte électrique 31 et à rapprocher la première extrémité plane 36 de la carte électrique 31. L'élément de détection 32 est donc ramené dans sa position de repos lorsque les moyens de butée mécanique 21 ne sont pas en contact avec la première surface interne 13.

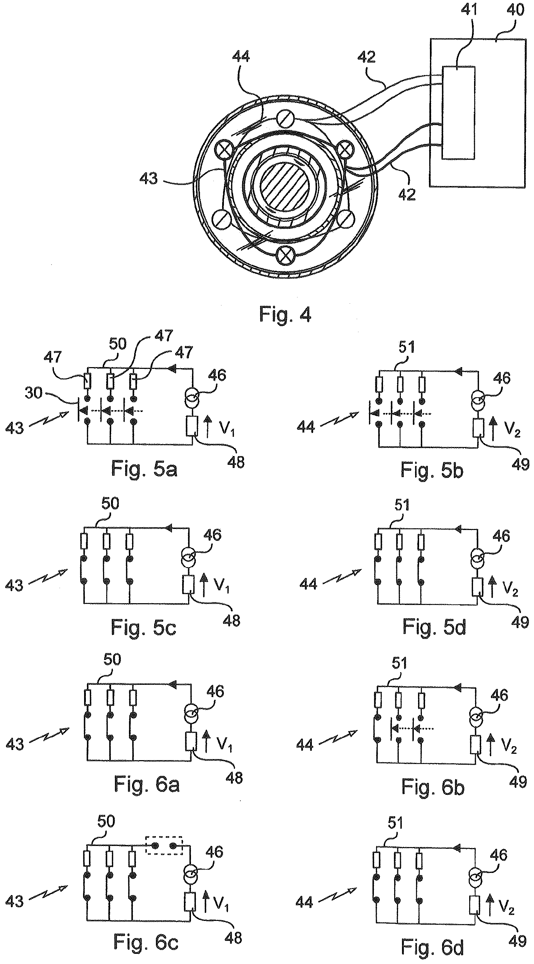

L'invention concerne aussi un système de freinage d'un véhicule, en l'occurrence d'un aéronef tel que celui évoqué précédemment. Cet aéronef comporte au moins une roue équipée d'un frein muni d'un actionneur électromécanique semblable à l'actionneur 1 de l'invention décrit précédemment. Le système de freinage de l'invention comporte aussi des moyens de contrôle externes 40, représentés schématiquement sur la figure 4, qui sont notamment utilisés pour détecter si un effort de freinage est effectivement appliqué ou non par l'actionneur électromécanique 1.

Les moyens de contrôle externe 40 comportent à cet effet des moyens de mesure électrique 41 connectés aux cartes électriques des six contacteurs 30 de l'actionneur 1 via un connecteur électrique 45 de l'actionneur visible sur la figure 1 et des fils électriques 42. Les moyens de mesure électrique 41 sont adaptés à réaliser des mesures électriques dépendant d'un état ouvert ou fermé des contacteurs 30 et à déduire de ces mesures électriques qu'un effort de freinage est effectivement appliqué ou non.

Avantageusement, on répartit les six contacteurs 30 de l'actionneur électromécanique en un premier réseau 43 de trois contacteurs 30 et en un deuxième réseau 44 de trois contacteurs 30.

Les contacteurs 30 du premier réseau 43 et du deuxième réseau 44 sont connectés en parallèle. Chaque contacteur est représenté sur les figures 5a à 6d par un interrupteur.

Les moyens de mesure 41 des moyens de contrôle 40 comportent une source de courant 46 générant un courant de mesure, une résistance série 47 monté en série de chaque contacteur 30, une première résistance de mesure 48 connectée au premier réseau 43 de contacteurs 30 et une deuxième résistance de mesure 49 connectée au deuxième réseau 44 de contacteurs 30. Les résistances série 47 présentent toutes une même valeur de résistance. Les première et deuxième résistances de mesure 48, 49 présentent elles aussi une même valeur de résistance. Les contacteurs 30, les résistances série 47, les première et deuxième résistances de mesure 48, 49 et la source de courant 46 sont connectés électriquement conformément aux figures 5a à 6d de manière à former un premier circuit de mesure 50 comportant les contacteurs 30 du premier réseau 43 et un deuxième circuit de mesure 51 comportant les contacteurs 30 du deuxième réseau 44.

En fonctionnement nominal, en référence aux figures 5a et 5b, les contacteurs 30 du premier et du deuxième réseaux 43, 44 sont tous ouverts lorsqu'un effort de freinage est appliqué. La tension V1 mesurée aux bornes de la première résistance de mesure 48 et la tension V2 mesurée aux bornes de la deuxième résistance 49 sont alors toutes deux sensiblement nulles.

De même, en fonctionnement nominal, en référence aux figures 5c et 5d, les contacteurs 30 du premier et du deuxième réseaux 43, 44 sont tous fermés lorsqu'aucun effort de freinage n'est appliqué. Les tensions V1, V2 mesurées aux bornes de la première 48 et de la deuxième résistance 49 sont alors non nulles et sensiblement identiques.

Cet agencement particulier des contacteurs 30 et des moyens de mesure 41 permet en outre de détecter et d'identifier des cas de pannes, ce qui permet notamment d'éviter qu'un effort de freinage ne soit détecté intempestivement.

Dans le cas d'un défaut de rupture du ressort de maintien d'un ou de plusieurs contacteurs 30, ces contacteurs 30 sont maintenus en permanence dans un état ouvert. Les figures 6a et 6b représentent une situation dans laquelle aucun effort de freinage n'est appliqué, et dans laquelle deux ressorts de maintien 33 de deux contacteurs 30 du deuxième réseau 44 sont en défaut. La deuxième tension V2 mesurée aux bornes de la deuxième résistance de mesure 49 est différente de la première tension V1 mesurée aux bornes de la première résistance de mesure 48, car le courant de mesure traverse une seul résistance série 47 du deuxième circuit de mesure 50 et non trois résistances série 47, comme c'est le cas pour le premier circuit de mesure 50. Cette dissimilarité particulière entre les tensions mesurées permet de détecter le défaut de rupture des ressorts de maintien 33.

Dans le cas d'un défaut de circuit ouvert se produisant dans le premier circuit de mesure 50, révélateur par exemple d'un fil coupé, la première tension V1 mesurée aux bornes de la première résistance de mesure 48 est nulle alors que la deuxième tension V2 mesurée aux bornes de la deuxième résistance 49 est non nulle. Cette dissimilarité particulière entre les tensions mesurées permet de détecter le défaut de circuit ouvert.

L'invention n'est pas limitée au mode de réalisation particulier qui vient d'être décrit, mais, bien au contraire, englobe toute variante entrant dans le cadre de l'invention tel que défini par les revendications.

Bien que l'on ait décrit que la plaque d'appui vient en appui contre la roue dentée par l'intermédiaire d'une butée à billes, il aurait été possible d'utiliser à la place de la butée à billes une butée différente, par exemple une butée à rouleaux ou une butée à aiguilles.

## Revendications

1. Actionneur électromécanique pour frein de véhicule comportant un corps (4) dans lequel sont agencés un moteur électrique (5) et un poussoir (6) monté pour coulisser selon un axe de coulissement (X) en saillant du corps (4) de l'actionneur de manière à appliquer sélectivement un effort de freinage sur des organes de friction (2) du frein, le poussoir étant fileté et coopérant par l'intermédiaire d'une liaison hélicoïdale avec un écrou (8) entraîné en rotation par le moteur électrique (5), l'écrou (8) étant monté mobile axialement dans le corps (4) de l'actionneur entre une position de repos vers laquelle l'écrou (8) est repoussé par des moyens élastiques, et une position active vers laquelle l'écrou est déplacé à l'encontre des moyens élastiques lorsqu'un effort de freinage est appliqué, l'actionneur comportant en outre des moyens de détection du déplacement axial de l'écrou, les moyens élastiques comportant un ressort de compression taré (27) s'étendant entre le corps (4) et une plaque d'appui (20) qui s'étend autour de l'écrou en étant solidaire axialement de l'écrou (8) tout en étant libre en rotation vis-à-vis de l'écrou, caractérisé en que les moyens de détection comportent au moins un contacteur (30) adapté à détecter un déplacement axial de la plaque d'appui (20).

2. Actionneur électromécanique selon la revendication 1, dans lequel la plaque d'appui (20) vient en appui par l'intermédiaire d'une butée contre une roue dentée solidaire de l'écrou.

3. Actionneur électromécanique selon la revendication 2, dans lequel la butée est une butée à billes.

4. Système de freinage d'un véhicule comprenant au moins une roue équipée d'un frein muni d'un actionneur électromécanique selon la revendication 1, le système de freinage comportant en outre des moyens de contrôle (40) connectés à l'actionneur et comportant des moyens de mesure électrique (41) connectés au contacteur et adaptés à détecter si un effort de freinage est effectivement appliqué par l'actionneur.

5. Système de freinage d'un véhicule selon la revendication 4, l'actionneur comportant plusieurs contacteurs (30) répartis en un premier réseau (43) de contacteurs (30) connectés en parallèle et en un deuxième réseau (44) de contacteurs (30) connectés en parallèle.

6. Système de freinage d'un véhicule selon la revendication 5, dans lequel les moyens de mesure comportent une première résistance de mesure (48) connectée au premier réseau (43) de contacteurs (30) et une deuxième résistance de mesure (49) connectée au deuxième réseau (44) de contacteurs (30).

7. Système de freinage d'un véhicule selon la revendication 6, dans lequel les moyens de contrôle (40) sont adaptés à détecter un défaut sur l'un des réseaux de contacteurs lorsque les tensions mesurées par les moyens de mesure aux bornes de la première résistance de mesure (48) et de la deuxième résistance de mesure (49) sont différentes.

8. Système de freinage d'un véhicule selon la revendication 7, dans lequel les moyens de contrôle (40) sont adaptés à détecter un défaut de circuit ouvert sur l'un des réseaux ou un défaut d'un ressort de maintien (33) agencé pour maintenir un contacteur (30) en position fermée lorsqu'aucun effort de freinage n'est appliqué.

## Patentansprüche

1. Elektromechanischer Aktor für eine Fahrzeugbremse, umfassend ein Gehäuse (4), in dem ein Elektromotor (5) und ein Stößel (6) angeordnet sind, der entlang einer Verschiebungsachse (X) verschiebbar gelagert ist, während er aus dem Gehäuse (4) des Aktors vorsteht, um selektiv eine Bremskraft auf Reibelemente (2) der Bremse auszuüben, wobei der Stößel mit einem Gewinde versehen ist und über eine schraubenförmige Verbindung mit einer Mutter (8) zusammenwirkt, die von dem Elektromotor (5) in Drehung angetrieben wird, wobei die Mutter (8) in dem Gehäuse (4) des Aktors axial beweglich zwischen einer Ruhestellung, in die die Mutter (8) von elastischen Mitteln rückgestellt wird, und einer aktiven Stellung gelagert ist, in die die Mutter entgegen den elastischen Mittel bewegt wird, wenn eine Bremskraft aufgebracht wird, wobei der Aktor ferner Detektionsmittel zum Erfassen der axialen Bewegung der Mutter umfasst, wobei die elastischen Mittel eine kalibrierte Druckfeder (27) umfassen, die sich zwischen dem Gehäuse (4) und einer Auflageplatte (20) erstreckt, die sich um die Mutter erstreckt und dabei axial fest mit der Mutter (8) verbunden ist, während sie in Bezug auf die Mutter frei drehbar ist, **dadurch gekennzeichnet, dass** die Detektionsmittel mindestens einen Kontaktor (30) umfassen, der dazu geeignet ist, eine axiale Bewegung der Auflageplatte (20) zu erfassen.

2. Elektromechanischer Aktor nach Anspruch 1, bei dem die Auflageplatte (20) über einen Anschlag an einem fest mit der Mutter verbundenen Zahnrad zur Anlage kommt.

3. Elektromechanischer Aktor nach Anspruch 2, bei dem der Anschlag ein Axialkugellager ist.

4. Bremssystem für ein Fahrzeug, umfassend mindestens ein Rad, das mit einer Bremse ausgestattet ist, die mit einem elektromechanischen Aktor nach Anspruch 1 versehen ist, wobei das Bremssystem ferner Kontrollmittel (40) umfasst, die mit dem Aktor verbunden sind und Mittel (41) zur elektrischen Messung umfassen, die mit dem Kontaktor verbunden und dazu geeignet sind, zu erfassen, ob eine Bremskraft von dem Aktor wirksam ausgeübt wurde.

5. Bremssystem für ein Fahrzeug nach Anspruch 4, wobei der Aktor mehrere Kontaktoren (30) umfasst, die in ein erstes Netz (43) von parallel geschalteten Kontaktoren (30) und in ein zweites Netz (44) von parallel geschalteten Kontaktoren (30) aufgeteilt sind.

6. Bremssystem für ein Fahrzeug nach Anspruch 5, bei dem die Messmittel einen ersten Messwiderstand (48) umfassen, der mit dem ersten Netz (43) von Kontaktoren (30) verbunden ist, sowie einen zweiten Messwiderstand (49), der mit dem zweiten Netz (44) von Kontaktoren (30) verbunden ist.

7. Bremssystem für ein Fahrzeug nach Anspruch 6, bei dem die Kontrollmittel (40) dazu geeignet sind, einen Fehler an einem der Netze von Kontaktoren zu erfassen, wenn die von den Messmitteln an den Klemmen des ersten Messwiderstandes (48) und des zweiten Messwiderstandes (49) gemessenen Spannungen unterschiedlich sind.

8. Bremssystem für ein Fahrzeug nach Anspruch 7, bei dem die Kontrollmittel (40) dazu geeignet sind, einen Fehler eines offenen Stromkreises an einem der Netze oder einen Fehler einer Haltefeder (33) zu erfassen, die ausgebildet ist, um einen Kontaktor (30) in geschlossener Position zu halten, wenn keine Bremskraft ausgeübt wird.

## Claims

1. Electromechanical actuator for vehicle brake comprising a body (4) in which are arranged an electric motor (5) and a plunger (6) mounted to slide along a sliding axis (X) by protruding from the body (4) of the actuator so as to selectively apply a braking force onto friction members (2) of the brake, the plunger being threaded and cooperating via a helical link with a nut (8) driven in rotation by the electric motor (5), the nut (8) being mounted to move axially in the body (4) of the actuator between a rest position towards which the nut (8) is pushed back by elastic means, and an active position towards which the nut is displaced against the elastic means when a braking force is applied, the actuator further comprising means for detecting the axial displacement of the nut, the elastic means comprising a calibrated compression spring (27) extending between the body (4) and a bearing plate (20) which extends around the nut by being secured axially to the nut (8) while being free in rotation with respect to the nut, **characterized in that** the detection means comprise at least one contactor (30) suitable for detecting an axial displacement of the bearing plate (20).

2. Electromechanical actuator according to Claim 1, in which the bearing plate (20) bears via an abutment against a toothed wheel secured to the nut.

3. Electromechanical actuator according to Claim 2, in which the abutment is a thrust ball bearing.

4. Braking system of a vehicle comprising at least one wheel equipped with a brake provided with an electromechanical actuator according to Claim 1, the braking system further comprising control means (40) connected to the actuator and comprising electrical measurement means (41) connected to the contactor and suitable for detecting whether a braking force is actually applied by the actuator.

5. Braking system of a vehicle according to Claim 4, the actuator comprising a plurality of contactors (30) distributed in a first network (43) of contactors (30) connected in parallel and a second network (44) of contactors (30) connected in parallel.

6. Braking system of a vehicle according to Claim 5, in which the measurement means comprise a first measurement resistor (48) connected to the first network (43) of contactors (30) and a second measurement resistor (49) connected to the second network (44) of contactors (30) .

7. Braking system of a vehicle according to Claim 6, in which the control means (40) are suitable for detecting a fault on one of the networks of contactors when the voltages measured by the measurement means at the terminals of the first measurement resistor (48) and of the second measurement resistor (49) are different.

8. Braking system of a vehicle according to Claim 7, in which the control means (40) are suitable for detecting an open circuit fault on one of the networks or a fault of a holding spring (33) arranged to keep a contactor (30) in closed position when no braking force is applied.
